# EUROPEAN PATENT SPECIFICATION

(11) **EP 2 994 702 B1**
(45) Date of publication and mention of the grant of the patent: **01.08.2018**
(21) Application number: 14795039.8
(22) Date of filing: 08.05.2014
(51) Int. Cl.: F24S 10/50, F24S 40/80, F28F 9/22, F28D 1/047

(54) **SOLAR WATER-HEATING DEVICE**
SOLARWASSERAUFHEIZVORRICHTUNG
SYSTÈME SOLAIRE DE CHAUFFAGE D'EAU

(30) Priority: 10.05.2013 HU P1300304
(43) Date of publication of application: 16.03.2016
(73) Proprietor: Hochmuth, Peter, 91757 Treuchtlingen (DE); Kun, Csaba, 7761 Kozármisleny (HU); Strausz, János, 7634 Pécs (HU)
(72) Inventor: Hochmuth, Peter, 91757 Treuchtlingen (DE); Kun, Csaba, 7761 Kozármisleny (HU); Strausz, János, 7634 Pécs (HU)
(74) Representative: Kacsuk, Zsófia
(86) International application number: PCT/HU2014/000043
(87) International publication number: WO 2014/181143

(56) References cited:
- RU-C1- 2 037 120
- SU-A1- 792 030
- US-A- 4 079 726
- US-A- 5 388 567
- Game: "SolarPro XB/XB2 Pool Heater", GAME Owner's Manual, 1 January 2011 (2011-01-01), pages 1-12, XP055279475, Retrieved from the Internet: URL:http://c.shld.net/assets/docs/spin_pro d_806281312.pdf [retrieved on 2016-06-10]
- BARANOVSKY N. V. ET AL.: 'Plastinchatye i spiralnye teploobmenniki. Moskva' MASHINOSTROENIE 1973, pages 36 - 39, XP008182347

## Description

The subject of the invention relates to a device with which water may be heated using solar energy. The device consists of two layers of flexible elastomer foil, in which with the fixing together of the two layers along lines a continuous passage is established which is hermetically sealed from the environment, and the two ends of the passage are supplied with connection elements. The invention also relates to a connection fitting that may be used with the water-heating device operated with solar energy as well as to the structure of the water-heating device required for this.

It is known that one of the ways of utilising solar energy is when a liquid is made to flow through a heat-absorbing pipe system exposed to solar radiation, and the liquid heated up in this way is used for various purposes. One such purpose is when the heated water is used for human use (bathing, household water, hot water, etc.) simply without any further procedural steps.

Several types of structures of the heat-absorbing pipe system, also called solar heating panels or collectors, have been created.

In the case of one type, such as the equipment presented in patent specification no FR - 2.871.182., tiltable shutters with horizontal axis are built as in a fence between two columns, in the axes of which and in the columns a continuous pipe coil is fitted in a serpentine shape. From the outside the entire equipment is painted matt black. The water to be heated flows continuously through the entire pipe coil. This may be viewed as if the heat-absorbing pipes were connected in series.

The water-heating device according to patent specification no GB - 1.328.372 can be said to be substantially similar, wherein the pipe coil may be wound up into a planar spiral shape, but it may also be laid down around a swimming pool as well in several lines. In this case the part of the heat-absorbing pipe exposed to the sun may be supplied with a ribbed surface, and the pipe sections lying next to one another form a pavement surface when connected to one another.

In another embodiment of the heat-absorbing pipe system, as can be seen, for example, in utility model specification no DE - 202.15.126.U, the heat-absorbing pipe system is formed by a distribution pipe, a collection pipe and heat absorbing pipes inserted between these. The water is separated in the distribution pipe; it flows in parallel in the heat-absorbing pipes and then leaves through the collection pipe.

From the point of view of the pipe arrangement, a simplified embodiment of the previous solution may be seen in utility model specification no DE - 20.2006.001.289.U, which serves for heating swimming pool water. Here, capillary pipes parallel to each other are connected to the distribution pipe; the other ends of these capillary pipes are open, through which the water flows directly into the swimming pool. A part of the upper surface of the equipment is coated with a photovoltaic material; the electricity produced operates the circulation pump built into the equipment. The pump sucks up the water through a suction pipe and transports it to the distribution pipe. The advantage of the photovoltaic operation is that it regulates the operation of the pump in proportion with the strength of the sunlight.

The range of devices also includes the solar collector according to patent specification no DE - 10.2005.061.008. In this case in the interest of an extra service the parallel heat-absorbing pipes connected between two parallel main pipes are divided into two identical groups. The one main pipe is divided into two parts, an input-dividing section and a collecting-outlet section, a heat-absorbing pipe group is connected to each of these. The extra service is that the input-dividing section and the collecting-outlet section may be directly connected to each other via a valve, so when the swimming pool is cleaned-chlorinated, the water does not have to be circulated through the device. A thermostatic valve may also be installed in the place of the valve, the temperature of the water may be regulated with this.

Over time a special structure of these water heating solar collectors was developed, which is made from plastic foil of the appropriate solidity on the pattern of mattresses that are inflated with air.

A classic example of this may be seen in patent specification no US - 5.388.567. The device is made from welding two black flexible plastic sheets without textile reinforcing in such a way that the weld is made around the edges of the sheets, as well as along parallel straight lines, the one ends of which are alternately connected to the one or the other edge weld. With this a serpentine shaped continuous passage is created. Input and output connection fittings are connected to the passage making it possible for water to flow through the collector. The free ends of the inner welds are reinforced with the riveting together of large sized washers.

The patent specification already mentioned, no GB - 1.328.372, also presents a similar device but in less detail. In this a welding pattern is visible where within the passages made with the parallel welding zigzagging small passages have been created with perpendicular welding, significantly increasing the total length of the route of the water. Patent No. US 4,079,726 discloses a further type of solar collector for heating water. Parallel welding lines connecting two plastic sheets of the solar water heater define a water passage between the plastic sheets.

The known water-heating solar collectors obviously perform their basic task of heating up water with the sun's heat radiation well, as the water flowing through the device will be heated up to some extent. This is not a problem if an unlimited amount of time is available for circulating the water (naturally within the period of effective solar radiation). In the case of the parallel arrangement of the heat-absorbing pipes, the circulating water remains in the device for too short a time, therefore in the case of a single flow-through its temperature only rises to a small extent, while the single, continuous - serially arranged - heat-exchanger pipe has a low throughput ability. In both cases the final result is that the mass of heated water is only heated up slowly. In the second case it is also questionable whether there is an actual increase in temperature along the entire length of the heat-absorbing pipe. Therefore, although most of the devices presented are made especially for heating the water of swimming pools, they are hardly suitable for this due to the aforementioned problems.

In the case of devices from plastic sheets made with welding there may be structural problems beside the thermodynamic problem. In the case of the passages created with parallel welds, the actual distance between the welds decreases when the passages are filled with water. The reduction mathematically may be nearly 40%. However, the part of the plastic sheet outside of the parallel welds is not shortened by such an extent, what is more, the two welds running perpendicular to the parallel welds do not shorten at all.

Therefore, significant stresses are created in the plastic sheet in the vicinity of the aforementioned edges. This causes a problem especially when the device is to be located vertically, gripped at the edge. The objective of the invention is to create a water-heating device operated with solar energy with which it is possible to heat up the total amount of circulated water in the fastest way, possibly such, that the temperature of the entire mass of water only reaches the level suitable for bathing (23 - 27 °C), but this is ensured during the entire time period of effective solar radiation. The objective of the invention is also to create a structure with which the stress occurring at their edges of devices made from plastic sheets by welding may be reduced.

The invention is based on the recognition that if the heat-absorbing pipes running in parallel are divided into groups comprising a small number of pipes, and the heat-absorbing pipes within one group are connected in parallel, while the groups are connected to each other in series, then a pipe arrangement is obtained in the case of which, on the one part, the heat-transfer is sufficiently fast, and, on the other part, the water flowing in the device remains in it for a sufficiently long time so that during this time the rise in temperature is more significant.

It is also a part of the recognition that in the case of devices from plastic sheets made by welding creating the welds closest to their edges not in a straight line - curved or wave shaped - makes deformation easier, therefore less stress is created when the device is filled with water.

Accordingly, the invention relates to a water-heating device for use of solar energy, wherein the water-heating device consists of two flexible elastomer foil layers, water guiding passages are created by fastening together the two foil layers along fastening lines at a permanent distance from each other, the passages have connection elements serving to input and output the water at the two most distant points of the passages from the point of view of water flow. According to the invention bundles are formed from the neighbouring passages. A single bundle contains two to twelve passages, preferably three to eight passages. The ends of the passages of neighbouring bundles are connected to each other with several connection passages arranged in parallel in such a way that one end of the passages of a given bundle is connected to the ends of the passages of the neighbouring bundle on one side of the given bundle and the other end of the passages of the given bundle is connected to the ends of the passages of the neighbouring bundle on the other side of the given bundle, and the parallel passages of two neighbouring bundles are connected to each other in reverse order as compared to each other. According to the invention, fastening lines bordering the neighbouring connection passages are created at a distance from each other and optionally fastening lines bordering the neighbouring passages are also created at a distance from each other, whereby a gap remains between the neighbouring connection passages and optionally between the neighbouring passages. According to a preferred embodiment the edges of the two foil layers are fastened to each other all around along a continuous fastening line, and these determine one side of the two outermost passages and the connection passages.

According to a preferred embodiment the width of the passages when out of use is 15 - 50 mm.

According to a preferred embodiment the width of the connection passages when out of use is 25 - 150 mm.

According to an example the width of the connection aperture between the connection passages when out of use is 10 - 22 mm.

According to an sample the ends of the passages of two neighbouring bundles on the same side are connected by a single connection passage, and the cross-section of the connection passages in the state when filled with water is two-four times the size of the cross-section of the passages.

According to an sample the size of the cross-section of the connection passages when filled with water is as large as the sum of the cross-sections of the passages connected to them.

According to an example the points of a central line of the connection passages are at a gradually changing distance from an axis of the device perpendicular to the passages.

According to an example the distance between the points of a central line of the connection passages and an axis of the device perpendicular to the passages is the smallest at the connection apertures with the smaller cross-section. According to an example the points of the central line of the connection passages are at a gradually changing distance from the axis of the device perpendicular to the passages, and the central line is part of a regular wave line, preferably half of it.

According to a preferred embodiment the length of every passage is the same. According to a preferred embodiment at one edge, preferably the longer edge, the two foil layers extend beyond the outermost fastening line determining the internal space, whereby fastening the two foil layers together along a further fastening line a sleeve is created independent of the passages suitable for accommodating a rigid rod. According to a preferred embodiment at the ends of the passages of the two outermost bundles that are in connection with a connection opening a curved fastening line is connected to the end of the outermost fastening lines delimiting the two outermost passages, while the ends of the fastening lines separating the passages of the bundle are each widened with a closed loop.

According to another preferred embodiment at the ends of the passages of the two outermost bundles that are in connection with a connection opening there is a curved fastening line connected to each of the ends of both fastening lines delimiting the two outermost passages, the two foil layers are fastened together discontinuously along the inner curved fastening line, and each of the ends of the other fastening lines separating the passages of the bundle are widened by a closed loop. This disclosure also relates to an arrangement and connection fittings that may be used with a water-heating device operated with solar energy, and contains water transport passages created between two flexible elastomer foil layers by fixing the foil layers together along lines, furthermore, the passages have connection openings at their most distant points from the point of view of the water flow serving to input and output the water. Accordingly, a supporting element is located around the connection openings from the outside that has a seat created with a cone narrowing towards the internal space of the device that accommodates in it the material of the device around the connection opening. A connection sleeve is fitted into the connection opening the external shell surface of which is a conical surface on at least a section of it the cone angle of which is the same as that of the cone angle of the seat.

In the case of one preferred example of the arrangement and connection fitting, the connection opening is created in the surface of the one foil layer, which is surrounded by a cylindrical rim on the external surface of the foil layer.

Another example of the arrangement and connection fitting is such that the connection opening is created as a passage between the two foil layers, which is delimited on two sides by the fixing on the edges of the foil layers and, in a given case, by the fixing along the two fastening lines perpendicular to the edges. Another example of the arrangement and connection fitting is where there is a slot on each of the two sides in the supporting element from the narrower end of the conical seat, in the plane of the axis of the seat. In another example of the arrangement and connection fitting, the slots formed in the supporting element loosely fit to the joint thickness of the two foil layers fixed together. Another example of the arrangement and connection fitting is where the half-angle of the cone of the supporting element seat and of the conical surface of the connection sleeve is smaller than any friction cone half-angle belonging to its own and the foil layer's material. Another example of the arrangement and connection fitting is such that the supporting element from the wider end of the seat is supplied with a threaded tightening element that has the same axis as the seat, which, when the connection fitting is in the state of being fixed to the device, is tightened up to the stop surface of the connection sleeve formed from the wider end of the conical surface.

Finally, another example of the arrangement and connection fitting is also where a tightening element exerting a tangential tightening force is fixed to the external surface of the supporting element supplied with slots when the connection fitting is in the state of being fixed to the device.

The invention will be presented in greater detail on the basis of an examplary embodiment with reference to the figures, wherein
Figure 1 shows an example of the water-heating device operated with solar energy in top view,
Figure 2 shows the partial longitudinal cross-section I-I indicated in figure 1,
Figure 3 shows the partial lateral cross-section II-II indicated in figure 1,
Figure 4 shows the partial lateral cross-section III-III indicated in figure 1,
Figure 5 shows the partial lateral cross-section IV-IV indicated in figure 1,
Figure 6 shows a second example of the water-heating device operated with solar energy in top view,
Figure 7 shows the detail V indicated in figure 6 slightly enlarged
Figure 8 shows a third example of the water-heating device operated with solar energy in top view,
Figure 9 shows an example of the arrangement of the vicinity of the connection opening of the device visible in figure 8, in top view, slightly enlarged,
Figure 10 shows another example of the arrangement of the vicinity of the connection opening of the water-heating device visible in figure 8, in top view, slightly enlarged,
Figure 11 shows another example of the arrangement of the connection opening of the water-heating device according to figure 1,
Figure 12 shows an embodiment of the water-heating device operated with solar energy according to the invention, in perspective top view,
Figure 13 shows the vicinity of the connection opening of the device visible in figure 12 in top view, slightly enlarged.

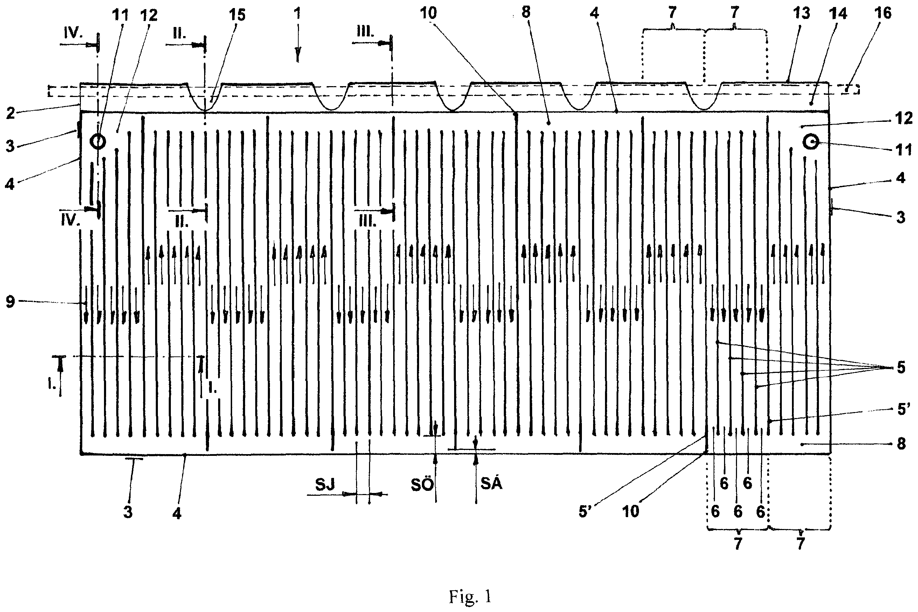

For the purpose of easier understanding it is worthwhile to start the presentation of the water-heating device operated with solar energy with respect to a simpler example. This is presented in figures 1 - 5.

The water-heating device 1 is assembled from two rectangular foil layers 2 of the same size. The material of the foil layers 2 is black PVC resistant to UV radiation and chlorinated water, but other flexible elastomer foil of other colour may also be used. The use of black coloured foil layers is preferred because this increases the heat-absorbing ability of the water-heating device 1. The thickness of the foil layers is 0.5 mm.

The material quality, thickness selected for the two foil layers 2 as well as the fixing technology applied for these (welding, solvent-based adhesive, etc.) are well known by persons skilled in the art, therefore there is no need for presenting them further. The width of the fixing surfaces is also derivable from the selected material quality and from the size of the water-heating device.

As it can be seen in figure 1, the foil layers 2 are fixed together at their edges 3 along a continuous fastening line 4 running all around, with this a completely closed internal space is created between the two foil layers 2. In the case of this embodiment the material is such that it may be welded, therefore the fixing takes place in this way.

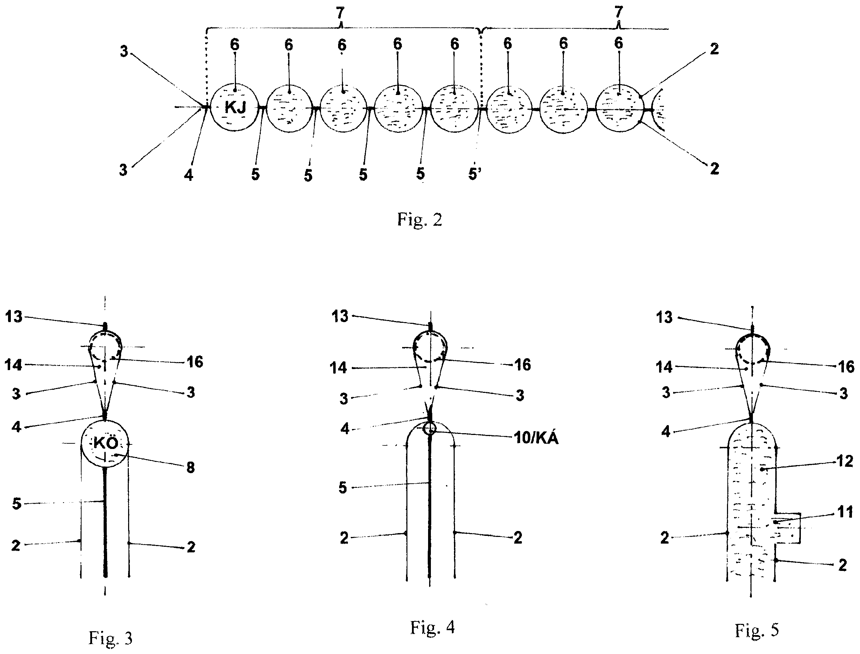

The foil layers 2 are also fixed together between the fastening lines 4 by welding along fastening lines 5. With the fixing along the fastening lines 5 parallel passages 6 visible in figure 2 are created in the internal space between the fastening along the fastening lines 4. (Figure 1 and figures 2-5 are not in harmony with each other, because in figure 1 the water-heating device 1 is depicted not filled with water, i.e. in a flattened state, while for the purpose of clearer depiction figures 2-5 present the water-heating device 1 filled with water.)

The distance between the fastening lines 5 is a constant value, on the one part, all the way along each two fastening lines 5 and, and on the other part, between every neighbouring fastening lines 5 as well. In the present case the fastening lines 5, being straight lines, are parallel lines lying at the same distance from each other. It may be mentioned that although the water-heating device 1 may also be made according to a different fastening pattern, where the fastening lines are not straight, or the distance between them varies, it is reasonable to maintain a uniform distance, because a varying cross-section is not preferred from the point of view of flow properties.

Disregarding some exceptions, the fastening lines 5 are the same length, shorter than the distance between the edge fastening lines 4 and both of their ends are at the same distance from the fastening lines 4.

The passages 6 are in bundles 7 in such a way that one end of every fifth fastening line 5' is much closer to the edge fastening line 4 than that of the other fastening lines 5. Therefore, five passages 6 form one bundle 7.

As it may be seen better in figure 3, due to that the ends of the fastening lines 5 and the edge fastening line 4 are spaced from each other, these spacings together determine a connection passage 8. Both ends of the passages 6 belonging to one bundle 7 are each connected to a connection passage 8, therefore, from the point of view of flow properties the passages 6 are arranged substantially in parallel. (Which half of the connection passages 8 has a distribution function and which half has a collecting function is not determined by the technical arrangement, this is only determined by current flow direction of the water in them. The arrows 9 indicate one possible direction, thereby also indicating the arrangement of the bundles 7 as well.)

From figure 1 it may be appreciated that the identically positioned ends of the passages 6 of two neighbouring bundles 7 are connected to a single connection passage 8. The given connection passage 8 is delimited at its two ends by the fastening lines 5' the ends of which are much closer to the edge fastening line 4 than the ends of the other fastening lines 5. Between the two fastening lines 5' the cross-section KÖ of the connection passage 8 is the same all along it. As the end of the fastening line 5' does not reach the edge fastening line 4, a connection aperture 10 is formed between the two - in the way presented in figure 5 - that has a significantly smaller cross-section KÁ than the cross-section KO of the connection passage 8.

As it has already been mentioned and as can be seen in figure 1, the ends of the longer fastening lines 5' are alternately closer to the fastening line 4 at their one and their other end. As a consequence of this the passages 6 of a bundle 7 are in connection with the passages 6 of the neighbouring bundle 7 on the one side of the given bundle 7 via the connection passage 8 at their one end, and are in connection with the passages 6 of the other neighbouring bundle 7 on the other side of the given bundle 7 via the connection passage 8 at their other end.

For the input and output of the water it can be seen in figures 1 and 5 that there are connection openings 11 formed in one of the foil layers 2, which connection openings 11 are each only surrounded by a short stiffening rim. No connection fitting is depicted, as this may be selected as desired and installed. The connection openings 11 each open into individual distribution spaces 12. The distribution space 12 is arranged at the ends of the passages 6 of the two outermost bundles 7, opposite to the connection passage 8 connected to them, in such a way that here the fastening lines 5 are a little shorter, whereby a larger continuous space is created. According to the depicted embodiment the two distribution spaces 12 and connection openings 11 are each arranged in a separate corner of the water-heating device 1 next to the same edge fastening line 4, but this is not necessary from the point of view of application, this depends on whether the number of the bundles 7 is odd or even.

The two foil layers 2 extend beyond one of the edge fastening lines 4, and are fastened together along a further fastening line 13 parallel with this. Thereby a long, pipe-like sleeve 14 is created between fastening lines 4 and 13. There are a number of V-shaped cuts 15 in the two foil layers 2 in the range of the sleeve 14.

The operation of the water-heating device 1 now presented does not demand special explanation. After the water-heating device 1 has been connected to the water system via the connection openings 11 (either to the main water supply or to an individually circulated water circuit), it may be used immediately when the water passes through it. The water entering via one connection opening 11 flows all the way through the water-heating device 1 in the direction according to the arrows 9, during this the radiation of the sun heats up the water. The heated water leaves the water-heating device 1 through the other connection opening 11.

In the case that the water-heating device 1 is to be positioned vertically a rigid rod 16 may be inserted into the sleeve 14, with the help of which the water-heating device may be suspended. The rod 16 stiffens the water-heating device 1 and prevents any suspensders from possibly ripping the foil layers 2. If the rod 16 were to bend under the weight of the water-heating device 1, then the suspenders may not only be fitted to the two ends of the rod 16 but also to the cuts 15.

If, accidentally, air bubbles are created these are able to pass through the smaller cross-section KÁ connection aperture 10 leading from one connection passage 8 to the other, in this way air blockages preventing fluid flow are will not be created. The cross-section KÁ is otherwise selected so that the amount of water flowing through it is not significant, therefore the connection aperture 10 does not act as a bypass.

Finally, in connection with use, it must be mentioned that although such types of water-heating devices 1 operated with solar energy are usually used for heating continuously flowing water, the water-heating device 1 may also be used in batch operation.

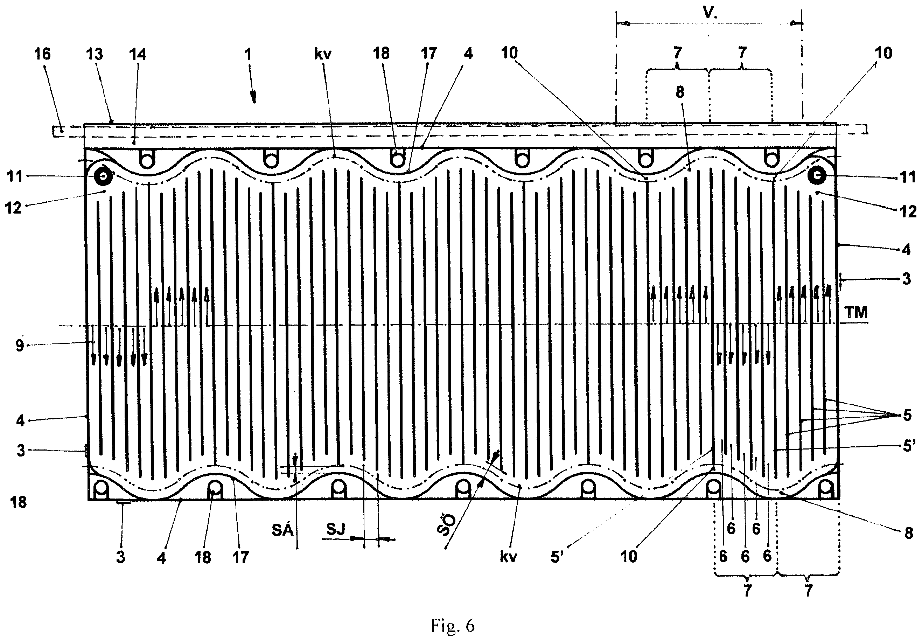

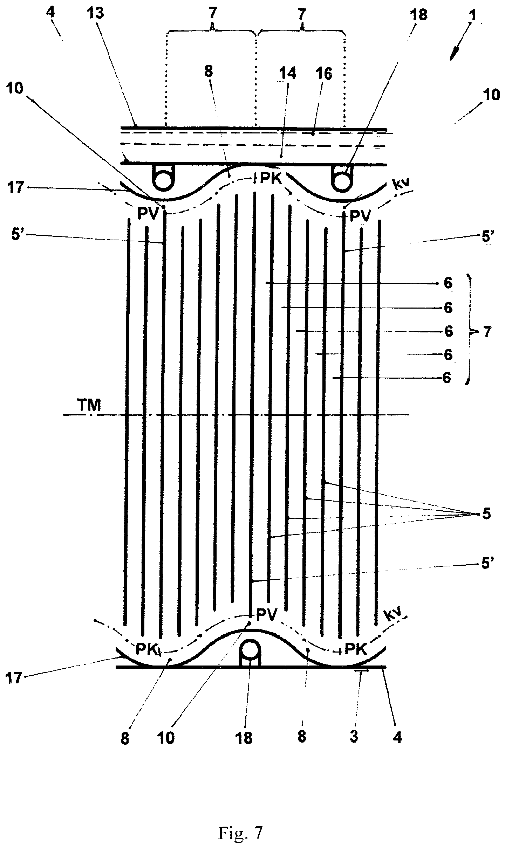

As it was discussed earlier, when the water-heating device 1 is being filled up with water stress is created in the zone of the edge fastening line 4, because the effective length of the water-heating device 1 is reduced in the direction perpendicular to the parallel passages 6, however, not along the straight fastening lines 4 perpendicular to the passages 6. The example illustrated in figures 6 and 7 of the water-heating device 1 was created to reduce these stresses, which example is an actually constructed example of the water-heating device 1 operated with solar energy. With regard to its bases this water-heating device 1 is set up similarly to the previous one, thus the reference numerals speak for themselves, it is not necessary to present the elements that have already been presented in detail, it is sufficient to just present the difference in more detail on a detail of the water-heating device 1.

In figure 7 two neighbouring bundles 7 are shown the passages 6 of which are connected to a common connection passage 8 at their one end (the upper end according to the figure). As it may be seen in figures 6 and 7, there is also a fastening line 17 within the edge fastening lines 4 and perpendicular to the fastening lines 5. This fastening line 17 determines the connection passage 8 on the one side - and, as before, on the other side, the end of the fastening lines 5.

The distance of the fastening line 17 with respect to the axis TM of the water-heating device 1 is alternating, at the connection apertures 10 it is the smallest, between the two it continuously increases, and at the border of the two neighbouring bundles 7, at the middle of the connection passages 8 it is the greatest. In the case of this embodiment the section of the fastening line 17 between the two connection apertures 10 is a section of a regular wave line (for example, sine wave) consisting of curved sections (mathematically more correctly a period of a cosine curve), therefore, the entire fastening line 17 - as it can be seen in figure 6 - forms a single, regular wave line with the same number of periods as the number of bundles 7 within the water-heating device 1. Naturally, the fastening line 17 may be formed by other curves or even by straight sections as well

In the same way as with the previous example the ends of the fastening lines 5 are at the same distance from this fastening line 17, and the fastening line 5' is also at a smaller distance, identical to the previous example. As a consequence of this the distance of the central line kv of the connection passage 8 measured from the axis TM is also the smallest at the end points PV at the connection opening 10, and progressively increases towards the middle PK point between the two neighbouring bundles 7. The central line kv is also a regular wave line consisting of curved sections.

Naturally, this arrangement does not modify the size difference between the states when the device 1 is unfilled or filled with water, instead it serves to change the direction of the stress on the connection passages 8. Therefore, instead of an unidirectional stress pointing in the direction of the end of the passages 6 and occurring in the material of the connection passage 8, multidirectional and divided stress of various natures occurs.

The fastening line 17 touches the fastening line 4 at its points most distant from the axis TM, and between two such points further, small, circular fastening lines 18 are provided which run up to the fastening line 4 with straight lines. Within the circular shaped part of the fastening lines 18 the two foil layers 2 have been removed, whereby the water-heating device 1 may be suspended using these holes (but preferably only in a state not filled with water, for example, for drying).

The above description must be supplemented with a number of remarks.

First of all, the passages 6 have no special direction: they may be parallel with the shorter edges 3 of the foil layers 2 in the way depicted, or they may be parallel with the longer edges 3. This is true for both the already described embodiments of the water-heating device 1 and the embodiments to be presented later. This had to be pointed out now because in the case of the present embodiment the location of the waved fastening line 17 is not optional. As the waved fastening line 17 may only be formed at the ends of the passages 6, its position is dependent on the direction of the passages 6. (It should be noted, that the water-heating device 1 may also be square shaped, in which case the previous arrangement question, does not arise at all.)

The selection of the direction of the passages 6 also influences the need for the connection apertures 10. The connection apertures 10 are only needed if the water-heating device 1 will be used in a vertical position, and the passages 6 in are vertical in this position. It is mostly only in this case that there is a risk of air blocks being created, which problem is overcome with the connection apertures 10. Naturally, the connection apertures 10 do not influence the perfect operation of the water-heating device 1 if the position in which it is used or the position of the passages 6 is horizontal, therefore, if the position in which the device 1 will be used cannot be predicted in advance, it is preferred to provide connection apertures 10.

Although in the case of the depicted example the end points PV of the connection passages 8 are closer to the axis TM, and the middle points PK are more distant therefrom, theoretically the positions of these may be interchanged. In fact, if the ends of the two connection passages 8 are connected with the connection aperture 10, then it is preferred to situate the end points PV further away from the axis TM, because then in the vertical position these are the highest points, whereby air blocks are least likely to be formed.

In the case of the depicted water-heating device 1 the central lines kv of the connection passages 8 created as a wave line consisting of regular, curved sections are in the same height at the two edges of the water-heating device 1. If the previous aspect affecting the connection aperture 10 is disregarded, the water-heating device 1 may also be arranged in such a way that the central lines kv at the two edges of the water-heating device 1 are the mirror images of each other with regard to the axis TM, i.e. they are displaced by half a period with respect to each other. In this case the length of the passages 6 varies, but this does not affect the operation of the water-heating device 1.

On the basis of the experience obtained with the example of the water-heating device 1 presented now and actually realised concrete facts may also be added to the theoretical presentation provided till now. One of the consequences of the practical experience is that - although in figures 1 and 6 there are five passages 6 in one bundle 7 - in the latest, actually constructed example to be presented in the following only four passages 6 were arranged in one bundle 7. Otherwise, it is preferred to combine two-twelve, but preferably three-eight passages 6 into a bundle 7. As discussed in the presentation of the problems in connection with prior art water-heating devices, the transmission ability of a single or two passages 6 linked in parallel is too small, the flow of water slows down and its path in the water-heating device 1 is too long. This also unnecessarily loads the pump and inefficiently utilises the solar energy. More than eight passages 6 also slow down the flow rate, and air blocks may be created.

The width SJ of the passages 6 in the case of an out-of-use water-heating device 1 is 25 mm. This value may be chose between 10 - 80 mm. Under 10 mm the passage 6 would be too narrow for the pump provided with the pool to force the water through it. Apart from this, the large amount of welds would make the manufacture of the water-heating device 1 more expensive, and the welded surfaces would take a lot away from the useful surface. In the case of the width SJ being above 80 mm the volume size of the passages 6 would be too large, so the water-heating device 1 would be very heavy when filled with water, apart from this the flow rate would slow down in this case too and the aforementioned air blocks would be created.

On the basis of the practical experience it may be said that four passages 6 with a width SJ of 25 mm - when out of use - transport as much water so that the flow rate is still enough for the flowing water to push any air bubbles out of the passages. It is important for the water-heating device 1 to deaerate itself, as the air bubbles stuck in it prevent the flow of water, and due to the heat-insulating effect of air they prevent the water from being heated up. In other words: if an air bubble closes off a passage 6, and the water flow in it stops, the performance may drop by as much as a quarter.

The width SO of the connection passages 8 in the case of the out-of-use water-heating device 1 is 50 mm. After being filled up with water the passages 6 and the connection passage 8 take on a shape which provides a size that more-or-less ensures that the connection passage 8 has the same transmission cross-section as the four 25 mm- when out of use - passages 6 with width SJ. With regard to the number of passages 6 per bundle 7 and to their possible width SJ range - when out of use - the width SO of the connection passages 8 when out of use may be selected to be between 25 - 150 mm.

The width SÁ of the connection aperture 10 between the connection passages 8 in the case of the out-of-use water-heating device 1 is 15 mm. It is preferable to select this value to be between 10 - 22 mm. If the size is smaller than this it is uncertain if the air bubbles will be able to flow through, and in the case of a size larger than this the flow of water through the connection aperture 10 is significant.

From the previous data conclusions may be drawn about the relationship between the cross-sections KJ and KO of the passages 6 and of the connection passages 8 when filled with water. Preferably, the cross-section KO of the connection passages 8, when filled with water, is the same as the sum of the cross-sections KJ of the passages 6 connected to them. Naturally, this cross-sectional relationship is also influenced by the number of passages 6 per bundle 7 and their cross-section KJ when filled with water. However, in the case of a larger number of parallel connected passages 6 of larger cross-section KJ, the cross-section KO of the connection passage 8 would exceed the size acceptable from the point of view of fluid dynamics and material stress, therefore the size of the cross-section KO is preferably two-four times that of the cross-section KJ of a passage 6. Finally, just for information: the total volume of the passages 6 and connection passages 8 of the actually constructed water-heating device 1 with the sizes given previously is 12 litres.

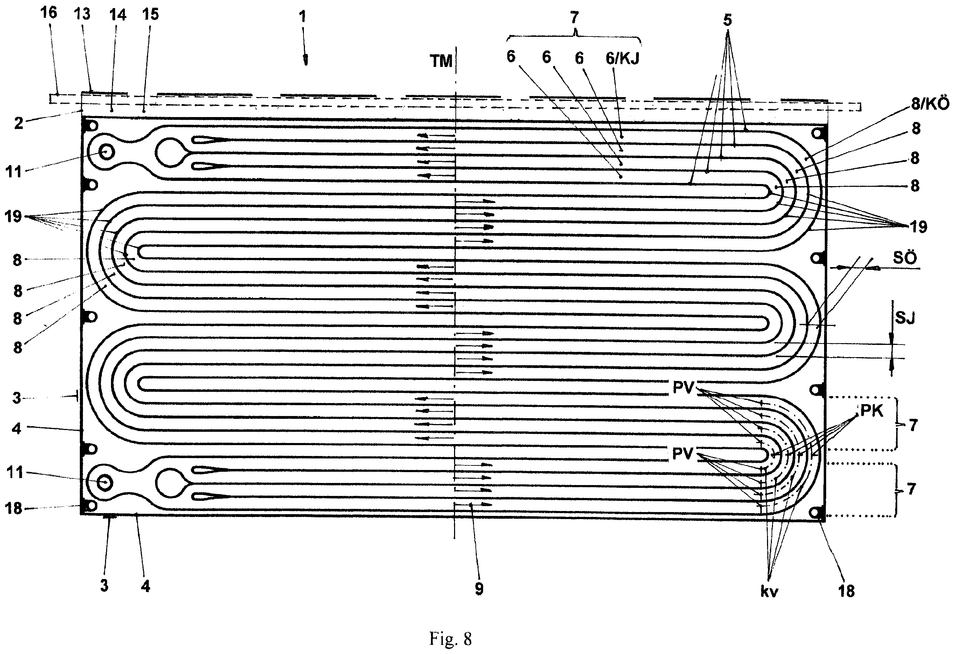

As discussed earlier, the water-heating device 1 may also be constructed so that the parallel passages are horizontal even if the expected position of use is vertical. The example of the water-heating device 1 shown in figure 8 is set up in this way. With respect to its arrangement, fundamentally this water-heating device 1 is similar to the two water-heating devices 1 already presented; therefore, the same reference numerals will indicate the same elements. In the case of this example the two foil layers 2 are also fixed together at their edge 3 along a continuous fastening line 4 running all around, but this only has a rigidity function. Within the edge fastening lines 4, the fastening lines 5 are arranged parallel to the longer side of the water-heating device 1, along which the foil layers 2 are also fastened together by welding, creating in this way between them the passages 6. Bundles 7 are created from groups of four passages 6.

A semicircular fastening line 19 is connected to each end of each fastening line 5 determining the passages 6 of every bundle 7. The other end of the fastening line 19 is connected to the end of another fastening line 5 in the same position of the neighbouring bundle 7. The fastening lines 5 of the two neighbouring bundles 7 are connected to the fastening lines 19 in reverse order, which means that the ends of the two fastening lines 5 of the bundle 7 falling the closest to each other are connected to each other by a fastening line 19, after this the closest fastening lines 5 on the opposite sides of the former fastening lines 5 are connected to each other with another fastening line 19, then the ends of the fastening lines 5 next to these, and so on.

As can be seen, the fastening lines 19 next to each other define connection passages 8. A consequence of this is that in the case of this embodiment there are as many connection passages 8 at the ends of the bundles 7 as there are passages 6 contained in a bundle 7. The one ends of the passages 6 of a given bundle 7 with the ends of the passages 6 in the same position of the bundle 7 neighbouring the given bundle 7 on the one side, and the other ends of the passages 6 of the given bundle 7 with the ends of the passages 6 in the same position of the bundle 7 neighbouring the given bundle 7 on the other side are connected to the connection passages 8.

The fastening lines 19 are arranged so that the width SO of the individual connection passages 8 is equal to the width SJ of the passages 6 in the case when the water-heating device 1 is out of use, accordingly when filled up with water the cross-section KO of the connection passages 8 is also equal to the cross-section KJ of the passages 6.

As a consequence of the semicircular shape of the connection passages 8 the end points PV of their central line kv are closer to the axis TM of the water-heating device 1 perpendicular to the passages 6, and progressing from the end point PV towards the central point PK every further point is at a continuously greater distance. This arrangement, with a similar result to the previous embodiment, influences the stress created in the vicinity of the connection passages 8 due to the effective shortening of the water-heating device 1 when filled with water perpendicular to the passages 6.

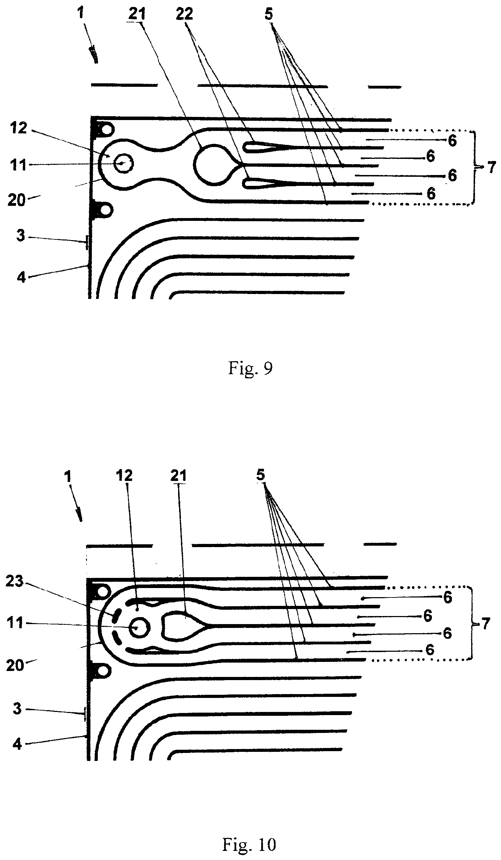

The arrangement of the connection element 11 and its vicinity is also different as compared with the previous embodiment. As it may be seen in figure 8 and in more detail in figure 9, at the free ends of the passages 6 of the two outermost bundles 7 a finger biscuit shaped fastening line 20 is connected to the ends of the edge fastening lines 5 bordering the two edge passages 6, this determines the distribution space 12. The connection opening 11 opens into this distribution space 12 via the one foil layer 2 with a cylindrical rim around it on the outside.

The ends of the fastening lines 5 separating the passages 6 of the bundle 7 widen, the centre one widens into a closed loop 21 and the others each into a closed loop 22. In this way the force exerted by the water pressure does not stress the straight end of a line-like weld, which when under load could easily split, but instead the force acts on a greater welded surface.

Figure 10 shows a detail of an example of a water-heating device 1 substantially the same as the previous example. In the case of this example as well the distribution space 12 is created by the fastening line 20 at the free ends of the passages 6 of the two edge bundles 7. Here, however, the closed loop 21 is only created at the end of the fastening line 5 separating the two middle passages 6 of the given bundle 7. A curved fastening line 23 is also connected to the ends of the other two fastening lines 5 - similarly to the outermost fastening lines 5 - but here the welding is broken (discontinuous). This broken welding line is able to withstand greater load, while water may flow freely through the gaps between the weld sections.

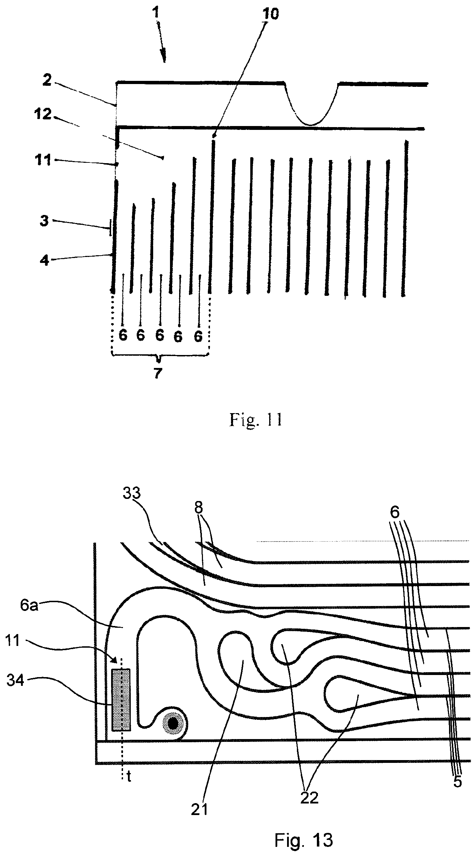

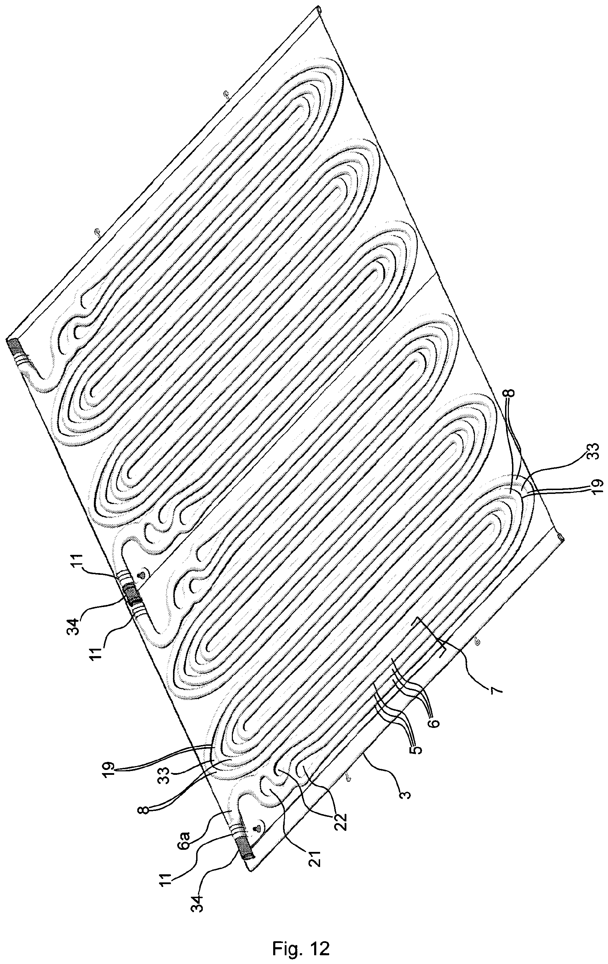

In the way identical to the previous example the connection opening 11 is created in the zone of the distribution space 12, in one of the foil layers 2. Further reduction of the stress created in the vicinity of the connection passages 8 from the effective shortening of the water-heating device 1 perpendicular to the passages 6 may be achieved with the embodiment according to the invention shown in figure 12, in which case the fastening lines 19 bordering the neighbouring connection passages 8 and optionally the fastening lines 5 bordering the passages 6 are created at a continuous distance or varying distance from each other, therefore, a gap 33 remains between the neighbouring connection passages 8 and between the passages 6. The parts of the foil layers 2 falling in the gap 33 necessarily become deformed when the connection passages 8 and the passages 6 are filled with water, which makes it possible for the connection passages 8 and the passages 6 to move relative to each other, and take on a position in which the stress is the lowest. The minimisation of the stresses reduces the risk of the water-heating device 1 becoming damaged, in other words, it contributes to the extension of its lifetime. The arrangement of the connection element 11 and its vicinity is also different as compared to the previous examples. As it may be seen in figure 12 and in more detail in figure 13, the loops 22 uniting the two edge passages 6 can be found in the case of this embodiment as well, as may the loop 21 uniting these, the latter, however, is connected with the lateral connection opening 11 ensuring flow in and out parallel with the foil layers 2 via a common connection passage 6a. In order to form the connection opening 11 one of the two foil layers 2 is cut through perpendicular to the passage 6a, and in that a connection sleeve 34 - for example, 30-40 mm in length - is fitted, the axis t of which will, in this way, be perpendicular to the edge 3 parallel with the edge bundle 7 of the foil layers 2. The connection sleeve 34 may be fixed with an adhesive, for example, and the fixing may be ensured with a clamp or with cable ties placed onto the external surface of the linking passage 6a. This way the lateral connection sleeve 34 can be conveniently connected to the opposite side connection sleeve 34 of an identically constructed water-heating device 1, in other words several water-heating devices 1 can be easily connected in series.

From the point of view of operation the examples of the water-heating device 1 presented in figures 6, 8 and the embodiment of the water-heating device 1 according to the invention presented in figure 12 are the same as the example first presented. This is not influenced by the fact that in the case of the example indicated in figure 8 and the embodiment indicated in figure 12 there is not just one connection passage 8 between the bundles 7, but as many as there are passages 6 in the bundle 7.

Here it must be mentioned that the number of connection passages 8 belonging to one bundle 7 may also be fewer than the number of passages 6 in the given bundle 7. As it has been mentioned, if the cross-section KJ of the passages 6 is large, and/or if the number of passages in the given bundle 7 is higher, then consequently the connection passage 8 must have a greater KO cross-section, but over a certain reasonable limit this may not be increased with a single connection passage 8. In this case the solution may be to increase the number of connection passages 8 belonging to the given bundle 7, and reduce the cross-section KO of the individual connection passages 8 connected in parallel to the acceptable value.

In the case of the water-heating device presented in figures 1-10 the connection openings 11 were arranged so that their axis is perpendicular to the plane of the water-heating device 1. Naturally, the connection openings 11 may also be arranged with their axis parallel with the plane of the water-heating device 1 similarly to the embodiment according to figure 12 with the help of the linking passage 6a formed at the edge of the foil layers 2. Due to its simplicity this arrangement may be easily understood in view of the presented figures without any need for further figures.

For example, in the case of the examples of the water-heating device 1 presented in figures 1 and 6, this linking passage may be formed such that the fastening line 4 on the edge of the foil layers 2 is interrupted and in the vicinity of this both foil layers 2 are each fitted with a lateral extension piece, which are welded together along two parallel fastening lines. The two fastening lines start from the outer end of the extension pieces, and are connected to the two ends of the fastening line 4 at the edge of the foil layers 2. A cylindrical connection sleeve fitted with a connection fitting may be fixed into the linking passages formed between the extension pieces. The connection sleeve may be, for example, fixed with adhesive, and the fixing may be ensured with a clamp or cable ties placed on the external surface of the extension pieces.

In the case of the examples of the water-heating device 1 presented in figures 1 and 6 the linking passage may also be formed so that the foil layers 2 are welded together along two pairs of parallel, lengthy, U-shaped fastening lines starting from the two ends of the fastening line 4, which is broken similarly to the previous embodiment, and extending into the distribution space 12. The linking passage is created between these, in which the cylindrical connection sleeve may be fixed. As a closed space is formed within each of the U-shaped fastening lines, in which there is no water, here bores may be made through the foil layers 2, through which the clamp or cable ties ensuring the fixing of the connection sleeve may be threaded.

The linking passage may be formed more easily in the case of the examples of the water-heating device 1 visible in figures 9 and 10. As here the distribution space 12 is surrounded by fastening along a separate fastening line 20, overlapping the edge fastening line 4 the fastening on the fastening line 20 must also be broken, and between the ends next to each other of the fastenings bordering the two created gaps the foil layers 2 must be fixed together along two parallel fastening lines. This is how the linking passage, connecting the environment with the distribution space 12, is formed between the two foil layers 2. The cylindrical connection sleeve may be fixed into this linking passage - e.g. with adhesive. The bores for the clamp or cable tie maybe formed on the two sides of the linking passage. This zone falls between the fastening lines 4 and 20, in this way it is closed off from the internal space of the water-heating device 1.

The seal between the connection sleeve and the linking passage is easier to ensure by creating the linking passage with fixing along two lines at a reducing distance towards the internal space of the water-heating device 1 instead of two parallel fastening lines, and by using a conical connection sleeve of the appropriate size.

It is a consequence of the structure of every water-heating device using solar energy that a greater heating performance may be achieved with a greater surface. The greater the surface the greater the own weight of the water-heating device is, as is the weight of the water in it. This may involve rigidity problems, besides this its handling (positioning, moving) is also more difficult. Therefore, instead of increasing the surface, it is preferable to use several water-heating devices with a smaller surface, which, depending on the task to be performed, may be linked is series and/or in parallel.

In the interest of ensuring the liquid-transporting connection between them, it is worthwhile fixing the water-heating devices together mechanically. For example, an easy-to-handle, suitably rigid fixing may be established in the following way.

At the identically positioned parallel edges of the two foil layers a fixing zone is created with a wider weld or two parallel, thinner welds on every water-heating device. A Velcro (hook and loop fastener) ribbon is fixed onto this fixing zone, with the one (loop) element on the one edge and the other (hook) on the other. With the help of the Velcro ribbon, the two water-heating devices may be fixed together along the entire length of the given sides, creating a quasi-unified surface device.

In the case of those examples where the connection opening is arranged with its axis perpendicular to the plane of the water-heating device, it is preferable to place the two elements of the Velcro ribbon on the opposite side of the plane of the water-heating device. In this way all connection openings will be located on the same surface of the water-heating device, making connecting them easier and making this connection more secure.

From the detailed presentation of the water-heating device 1 it can be seen that by forming bundles 7 from a number of parallel running passages 6 and by connecting these bundles 7 in series, we have achieved that the water does not circulate in the water-heating device 1 for an unnecessarily long time, but - as in several parallel connected passages heat transfer is quite fast - for sufficient time so that the water heats up more significantly during this time.

By selecting the number of passages 6 within a bundle 7 it can be achieved that in the case of a known demand concerning the amount and temperature of the water, the flowing water remains in the water-heating device 1 for precisely the required amount of time.

By forming the shape of the connection passages 8 other than in a straight line it has been possible to reduce the stresses caused by deformation, which significantly increases the lifetime of the water-heating device 1.

With the help of the sleeve 14 formed at the one edge of the water-heating device 1 it may be safely positioned vertically, mainly without there being the danger of ripping, which, on the one hand, reduces the amount of space required, and, on the other hand, reduces the risk of the water-heating device being stepped on, heavy or sharp-pointed objects being placed on and being ripped therewith.

## Claims

1. Water-heating device for use of solar energy, wherein the water-heating device consists of two flexible elastomer foil layers (2), wherein water guiding passages (6) are created by fastening together the two foil layers (2) along fastening lines (5) at a permanent distance from each other, wherein the passages (6) have connection elements serving to input and output the water at the two most distant points of the passages (6) from the point of view of water flow, wherein bundles (7) are formed from the neighbouring passages (6), wherein a single bundle (7) contains two to twelve passages (6), preferably three to eight passages (6), wherein the ends of the passages of neighbouring bundles (7) are connected to each other with several connection passages (8) arranged in parallel in such a way that one end of the passages (6) of a given bundle (7) is connected to the ends of the passages (6) of the neighbouring bundle (7) on one side of the given bundle (7) and the other end of the passages (6) of the given bundle (7) is connected to the ends of the passages (6) of the neighbouring bundle (7) on the other side of the given bundle (7), and the parallel passages (6) of two neighbouring bundles (7) are connected to each other in reverse order as compared to each other, **characterised in that** fastening lines (19) bordering the neighbouring connection passages (8) are created at a distance from each other and optionally fastening lines (5) bordering the neighbouring passages (6) are also created at a distance from each other, whereby a gap (33) remains between the neighbouring connection passages (8) and optionally between the neighbouring passages (6).

2. Device according to claim 1, **characterised in that** the edges (3) of the two foil layers (2) are fastened to each other all around along a continuous fastening line (4), and these determine one side of the two outermost passages (6) and the connection passages (8).

3. Device according to claim 1, **characterised in that** the width (SJ) of the passages (6) when out of use is 15 - 50 mm.

4. Device according to claim 1, **characterised in that** the width (SÖ) of the connection passages (8) when out of use is 25 - 150 mm.

5. Device according to claim 1, **characterised in that** the length of every passage (6) is the same.

6. Device according to claim 1, **characterised in that** at one edge (3), preferably the longer edge (3), the two foil layers (2) extend beyond the outermost fastening line (4) determining the internal space, whereby fastening the two foil layers (2) together along a further fastening line (13) a sleeve (14) is created independent of the passages (6) suitable for accommodating a rigid rod (16).

7. Device according to claim 1, **characterised in that** at the ends of the passages (6) of the two outermost bundles (7) that are in connection with a connection opening (11) a curved fastening line (20) is connected to the end of the outermost fastening lines (5) delimiting the two outermost passages (6), while the ends of the fastening lines (5) separating the passages (6) of the bundle (7) are each widened with a closed loop (21, 22).

8. Device according to claim 1, **characterised in that** at the ends of the passages (6) of the two outermost bundles (7) that are in connection with a connection opening (11) there is a curved fastening line (20, 23) connected to each of the ends of both fastening lines (5) delimiting the two outermost passages (6), the two foil layers (2) are fastened together discontinuously along the inner curved fastening line (23), and each of the ends of the other fastening lines (5) separating the passages (6) of the bundle (7) are widened by a closed loop (21).

9. Device according to claim 1, **characterised in that** the passages (6) of the outermost bundle (7) are united into a single connection passage, into which a connection sleeve (34) with an axis (t) parallel with the foil layers (2) is inserted as a connection element serving to input and output the water.

10. Device according to claim 9, **characterised in that** the connection sleeve (34) is arranged with an axis (t) perpendicular to the edge (3) of the foil layers (2) parallel with its outermost bundle (7), preferably in such a way that it may be connected to an opposite side connection sleeve (34) of another water-heating device (1) having the same construction.

## Patentansprüche

1. Warmwasserbereitungsvorrichtung zum Gebrauch von Solarenergie, wobei die Warmwasserbereitungsvorrichtung aus zwei flexiblen Elastomerfolienschichten (2) besteht, wobei Wasserführungskanäle (6) durch Aneinanderbefestigung der beiden Folienschichten (2) entlang von Befestigungslinien (5) in einem permanenten Abstand voneinander erzeugt werden, wobei die Kanäle (6) Verbindungselemente aufweisen, die dazu dienen, das Wasser an den zwei hinsichtlich des Wasserflusses an dem weitesten entfernten Punkten der Kanäle (6) einzulassen und auszulassen, wobei Bündel (7) aus den angrenzenden Kanälen (6) gebildet werden, wobei ein einzelnes Bündel (7) zwei bis zwölf Kanäle (6) enthält, vorzugsweise drei bis acht Kanäle (6), wobei die Enden der Kanäle benachbarter Bündel (7) miteinander mithilfe mehrerer Verbindungskanäle (8) verbunden sind, welche dergestalt parallel angeordnet sind, dass ein Ende der Kanäle (6) eines gegebenen Bündels (7) mit den Enden der Kanäle (6) des angrenzenden Bündels (7) an einer Seite des gegebenen Bündels (7) verbunden ist und das andere Ende der Kanäle (6) des gegebenen Bündels (7) mit den Enden der Kanäle (6) des angrenzenden Bündels (7) auf der anderen Seite des gegebenen Bündels (7) verbunden ist, und die parallelen Kanäle (6) der beiden angrenzenden Bündel (7) miteinander in umgekehrter Reihenfolge in dem Vergleich zueinander verbunden sind, **dadurch gekennzeichnet, dass** die Befestigungslinien (19), welche die angrenzenden Verbindungskanäle (8) einfassen, mit einem Abstand voneinander erzeugt werden und optional die Befestigungslinien (5), welche die angrenzenden Kanäle (6) einfassen, ebenfalls in einem Abstand voneinander erzeugt werden, wobei eine Lücke (33) zwischen den angrenzenden Verbindungskanälen (8) verbleibt, und optional zwischen den angrenzenden Kanälen (6).

2. Vorrichtung nach Anspruch 1, **dadurch gekennzeichnet, dass** die Kanten (3) der beiden Folienschichten (2) miteinander rundherum entlang einer kontinuierlichen Befestigungslinie (4) verbunden sind, und diese eine Seite der beiden äußersten Kanäle (6) und der Verbindungskanäle (8) bestimmen.

3. Vorrichtung nach Anspruch 1, **dadurch gekennzeichnet, dass** die Breite (SJ) der Kanäle (6), wenn nicht in Gebrauch, 15 - 50 mm beträgt.

4. Vorrichtung nach Anspruch 1, **dadurch gekennzeichnet, dass** die Breite (SÖ) der Verbindungskanäle (8), wenn nicht in Gebrauch, 25 - 150 mm beträgt.

5. Vorrichtung nach Anspruch 1, **dadurch gekennzeichnet, dass** die Länge jedes Kanals (6) dieselbe ist.

6. Vorrichtung nach Anspruch 1, **dadurch gekennzeichnet, dass** an einer Kante (3), vorzugsweise an der längeren Kante (3), die zwei Folienschichten (2) sich jenseits der äußersten den inneren Raum bestimmenden Befestigungslinie (4) erstrecken, wobei durch Befestigung der beiden Folienschichten (2) aneinander entlang einer weiteren Befestigungslinie (13) eine Hülse (14) gebildet wird, welche unabhängig von den Kanälen (6) ist und sich für die Aufnahme eines starren Stabes (16) eignet.

7. Vorrichtung nach Anspruch 1, **dadurch gekennzeichnet, dass** an den Enden der Kanäle (6) der beiden äußersten Bündel (7), die sich in Verbindung mit einer Verbindungsöffnung (11) befinden, eine gekrümmte Befestigungslinie (20) mit dem Ende der äußersten Verbindungslinie (5) verbunden ist, welche die zwei äußersten Kanäle (6) begrenzt, während die Enden der Befestigungslinien (5), welche die Kanäle (6) des Bündels (7) voneinander trennen, jeweils mittels einer geschlossenen Schlaufe (21, 22) geweitet sind.

8. Vorrichtung nach Anspruch 1, **dadurch gekennzeichnet, dass** an den Enden der Kanäle (6) der beiden äußersten Bündel (7), die sich in Verbindung mit einer Verbindungsöffnung (11) befinden, eine gekrümmte Befestigungslinie (20, 23) vorhanden ist, die mit jedem der Enden der beiden die zwei äußersten Kanäle (6) begrenzenden Befestigungslinien (5) verbunden sind, die beiden Folienschichten (2) diskontinuierlich entlang der inneren gekrümmten Befestigungslinie (23) aneinander befestigt sind, und jedes der Enden der anderen Befestigungslinien (5), welche die Kanäle (6) des Bündels (7) trennen, durch eine geschlossene Schlaufe (21) geweitet sind.

9. Vorrichtung nach Anspruch 1, **dadurch gekennzeichnet, dass** die Kanäle (6) des äußersten Bündels (7) zu einem einzigen Verbindungskanal verbunden sind, in welchen eine Verbindungshülse (34) mit einer Achse (t) parallel mit den Folienschichten (2) als ein Verbindungselement eingefügt ist, um das Wasser einzulassen und auszulassen.

10. Vorrichtung nach Anspruch 9, **dadurch gekennzeichnet, dass** die Verbindungshülse (34) mit einer Achse (t) senkrecht zur Kante (3) der Folienschichten (2) parallel mit deren äußerstem Bündel (7) angeordnet ist, vorzugsweise dergestalt, dass sie mit einer Verbindungshülse (34) der gegenüberliegenden Seite einer anderen Warmwasserbereitungsvorrichtung (1), welche dieselbe Konstruktion aufweist, verbunden werden kann.

## Revendications

1. Dispositif de chauffage d'eau pour l'utilisation d'énergie solaire, dans lequel le dispositif de chauffage d'eau se compose de deux couches de feuille élastomères flexibles (2), dans lequel des passages de guidage d'eau (6) sont créés par fixation ensemble de deux couches de feuille (2) le long de lignes de fixation (5) à une distance permanente l'une de l'autre, dans lequel les passages (6) présentent des éléments de raccordement servant à faire entrer et sortir l'eau sur les deux points les plus distants des passages (6) du point de vue de l'écoulement de l'eau, dans lequel des faisceaux (7) sont formés depuis les passages voisins (6), dans lequel un seul faisceau (7) contient deux à douze passages (6), de préférence trois à huit passages (6), dans lequel les extrémités des passages de faisceaux voisins (7) sont raccordées les unes aux autres avec plusieurs passages de raccordement (8) agencés en parallèle de telle manière qu'une extrémité des passages (6) d'un faisceau donné (7) soit raccordée aux extrémités des passages (6) du faisceau voisin (7) sur un côté du faisceau donné (7) et l'autre extrémité des passages (6) du faisceau donné (7) soit raccordée aux extrémités des passages (6) du faisceau voisin (7) sur l'autre côté du faisceau donné (7), et les passages parallèles (6) de deux faisceaux voisins (7) sont raccordés l'un à l'autre dans l'ordre inverse l'un par rapport à l'autre, **caractérisé en ce que** des lignes de fixation (19) bordant les passages de raccordement voisins (8) sont créées à une distance l'une de l'autre et en option des lignes de fixation (5) bordant les passages voisins (6) sont aussi créées à une distance l'une de l'autre, moyennant quoi un écarte (33) subsiste entre les passages de raccordement voisins (8) et en option entre les passages voisins (6).

2. Dispositif selon la revendication 1, **caractérisé en ce que** les arêtes (3) des deux couches de feuille (2) sont fixées l'une à l'autre tout autour le long d'une ligne de fixation continue (4), et celles-ci déterminent un côté des deux passages extérieurs (6) et les passages de raccordement (8).

3. Dispositif selon la revendication 1, **caractérisé en ce que** la largeur (SJ) des passages (6) lorsqu'il est hors d'usage est de 15 à 50 mm.

4. Dispositif selon la revendication 1, **caractérisé en ce que** la largeur (SÖ) des passages de raccordement (8) lorsqu'il est hors d'usage est de 25 à 150 mm.

5. Dispositif selon la revendication 1, **caractérisé en ce que** la longueur de chaque passage (6) est la même.

6. Dispositif selon la revendication 1, **caractérisé en ce que** sur une arête (3) de préférence l'arête la plus longue (3), les deux couches de feuille (2) s'étendent au-delà de la ligne de fixation extérieure (4) déterminant l'espace interne, moyennant quoi en fixant les deux couches de feuille (2) ensemble le long d'une autre ligne de fixation (13), un manchon (14) est créé indépendamment des passages (6) adaptés pour le logement d'une tige rigide (16).

7. Dispositif selon la revendication 1, **caractérisé en ce que** sur les extrémités des passages (6) des deux faisceaux extérieurs (7) qui sont en raccordement avec une ouverture de raccordement (11) une ligne de fixation courbée (20) est raccordée à l'extrémité des lignes de fixation extérieures (5) délimitant les deux passages extérieurs (6) alors que les extrémités des lignes de fixation (5) séparant les passages (6) du faisceau (7) sont chacune élargies avec une boucle fermée (21, 22).

8. Dispositif selon la revendication 1, **caractérisé en ce que** sur les extrémités des passages (6) des deux faisceaux extérieurs (7) qui sont en raccordement avec une ouverture de raccordement (11) il y a une ligne de fixation courbée (20, 23) raccordée à chacune des extrémités des deux lignes de fixation (5) délimitant les deux passages extérieurs (6), les deux couches de feuille (2) sont fixées ensemble en discontinu le long de la ligne de fixation courbée intérieure (23), et chacune des extrémités des autres lignes de fixation (5) séparant les passages (6) du faisceau (7) est élargie par une boucle fermée (21).

9. Dispositif selon la revendication 1, **caractérisé en ce que** les passages (6) du faisceau extérieur (7) sont unis dans un seul passage de raccordement, dans lequel un manchon de raccordement (34) avec un axe (t) parallèle aux couches de feuille (2) est inséré en tant qu'élément de raccordement servant à faire entrer et sortir l'eau.

10. Dispositif selon la revendication 9, **caractérisé en ce que** le manchon de raccordement (34) est agencé avec un axe (t) perpendiculaire à l'arête (3) des couches de feuille (2) parallèlement à son faisceau extérieur (7), de préférence de telle manière qu'il puisse être raccordé à un manchon de raccordement de côté opposé (34) d'un autre dispositif de chauffage d'eau (1) présentant la même construction.
